Europäisches Patentamt

European Patent Office

Office européen des brevets

(11) Publication number: **0 510 295 A2**

# EUROPEAN PATENT APPLICATION

(21) Application number: **92100389.3**

(22) Date of filing: **11.01.92**

(51) Int. Cl.⁵: **C09K 5/04**, C09K 3/30

(30) Priority: **20.06.91 US 717952**
**24.04.91 US 690427**

(43) Date of publication of application:
**28.10.92 Bulletin 92/44**

(84) Designated Contracting States:
**CH DE FR GB IT LI NL**

(71) Applicant: **HALOCARBON PRODUCTS CORPORATION**
**120 Dittman Court, N. Augusta Industrial Park, P.O. Box 6369**
**N. Augusta, S.C.(US)**

(72) Inventor: **Sprague, Lee G.**
**909 Holiday Drive**
**North Augusta, South Carolina 29841(US)**
Inventor: **Elliott, Arthur J.**
**2238 Hillsdale Drive**
**Aiken, South Carolina 29803(US)**

(74) Representative: **Klöpsch, Gerald, Dr.-Ing.**
**Patentanwalt et al**
**An Gross St. Martin 6**
**W-5000 Köln 1(DE)**

(54) **Ozone safe refrigerants and blowing agents.**

(57) The use as a refrigerant or foam blowing agent of a 2-methoxy-1,1,1-trifluoroethane of the formula

$$CF_3CH_2OCX_3$$

in which
X each independently is F or H,
optionally in combination with other refrigerants or blowing agents. The 2-methoxy-1,1,1-trrifluoroethane decomposes in the atmosphere without damage to the ozone layer.

This is a continuation-in-part of Application Serial No. 690,427, filed April 24, 1991, now pending.

The most commonly used refrigerants and foam blowing agents are chlorofluorocarbons (CFCs). These CFCs are generally fully halogenated and have such great stability that they migrate into the upper atmosphere before decomposing. Once in the atmosphere, the chlorine present in CFCs is known to destroy the ozone layer, letting harmful UV radiation through to the surface of the earth.

One such known CFC which has been widely used is CFC-11 ($CFCl_3$), bp 24°C, but a recent international agreement will limit and eventually phase-out the production of CFCs, including CFC-11, in order to protect the ozone layer.

European Patent Application 385,737 discloses a chlorine-free refrigerant comprising bis (difluoromethyl)ether, $CHF_2OCHF_2$. Its boiling point is about 4°C, making it considerably more volatile than CFC-11 so that it cannot simply be substituted therefor in existing systems. Such compound because of its boiling point is not suitable for use as a blowing agent.

The book "Organofluorine Chemicals and Their Industrial Applications" 1979, edited by R. E. Banks, on pages 72 and 73 discloses the use of chlorofluorocarbons such as trichlorofluoromethane (R11) and dichlorodifluoromethane (R12) as foam blowing agents for polymers such as polyurethanes, polystyrene, poly(vinyl chloride) and other polyolefins.

It is accordingly an object of the invention to find a replacement for CFCs which is ozone safe, i.e. does not affect the ozone layer.

According to the present invention, a 2-methoxy-1,1,1-trifluoroethane, i.e. a methyl trifluoroethyl ether, of the formula

$$CF_3CH_2OCX_3$$

in which

X each independently is F or H, and preferably at least one is H, satisfy such objectives.

Thus there are included compounds wherein $CX_3$ is $CF_3$, $CHF_2$, $CH_2F$ and $CH_3$. Of these, there are preferred $CHF_2$ and $CH_3$. The compound 2-(difluoromethoxy)-1,1,1-trifluoroethane ($CF_3CH_2OCHF_2$) has a boiling point of 29°C, corresponding closely to that of CFC-11 ($CFCl_3$), viz. bp 24°C. The freezing point of $CF_3CH_2OCHF_2$ is less than -78°C, making it especially useful as a refrigerant.

The compound 2-methoxy-1,1,1-trifluoroethane ($CF_3CH_2OCH_3$) has a boiling point of 30°C and is especially useful for foam blowing.

There are a number of known ways to produce $CF_3CH_2OCHF_2$. For example U.S. 3,761,524 discloses the reaction of trifluoroethanol with chlorodifluoromethane in the presence of an alkali metal hydroxide to give $CF_3CH_2OCHF_2$ in one step from commercially available compounds. Alternatively U. S. 3,535,388 discloses the reaction of trifluoroethanol with dimethylsulfate to give $CF_3CH_2OCH_3$ which, after selective chlorination, is subjected to fluorination to give the desired compound.

While these ethers are useful as refrigerants and foam blowing agents by themselves, they may also be blended with other refrigerants or blowing agents, if desired, to obtain a desired balance of properties. The other agents used in the blending may be one or more of other fluoroethers, traditional CFCs, hydrochlorofluorocarbons or hydrocarbons such as pentane. Since $CF_3CH_2OCHF_2$ is non-flammable, it is especially useful to blend it with flammable materials in such proportions as to achieve a non-flammable mixture in use.

Advantageously, the ethers may form an azeotropic mixture with the other refrigerant or blowing agent. If the other agent contains chlorine, such as CFCs or hydrochlorofluorocarbons, the use of such agents with the instant ethers will serve to limit the amount of chlorine released to the atmosphere which might further damage the ozone layer.

The amount of methyl trifluoroethyl ether employed in any mixture can be varied widely, for example from 1 to 99%, preferably from 10 to 90% and especially from 25 to 75% by weight. The specific proportion for any specific application is determined by the physical, chemical and thermodynamic properties needed for that application.

It will be appreciated that the instant specification and claims are set forth by way of illustration and not limitation, and that various modifications and changes may be made without departing from the spirit and scope of the present invention.

**Claims**

1. A coolant or blowing agent composition comprising 1 to 99% by weight of (a) a 2-methoxy-1,1,1-trifluoroethane of the formula

   $$CF_3CH_2OCX_3$$

   in which
      X each independently is F or H,
   and (b) 99 to 1% by weight of (b) another fluorine-containing volatile compound.

2. A composition according to claim 1, in which at least one X is H.

3. A composition according to claim 1, in which (a) is $CF_3CH_2OCHF_2$.

4. A composition according to claim 1, in which (a) is $CF_3CH_2OCH_3$.

5. A composition according to claim 2, wherein (b) comprises $CFCl_3$.

6. A composition according to claim 1, wherein (a) is present in from 25 to 75% by weight.

7. In a cooling system comprising a cooling apparatus and a refrigerant contained in said apparatus, the improvement wherein such refrigerant comprises a 2-methoxy-1,1,1-trifluoroethane of the formula

$CF_3CH_2OCX_3$

in which
    X each independently is F or H.

8. A cooling system according to claim 7, wherein the refrigerant comprises $CF_3CH_2OCHF_2$.

9. A cooling system according to claim 8, wherein the refrigerant also comprises $CFCl_3$.

10. A cooling system according to claim 9, wherein (a) is present in from 25 to 75% by weight.

11. A cooling system according to claim 7, wherein the system is a refrigerator.

12. A cooling system according to claim 7, wherein the system is a freezer.

13. In the cooling of an article or space by use of a coolant, the improvement which comprises employing as said coolant a 2-methoxy-1,1,1-trifluoroethane of the formula

$CF_3CH_2OCX_3$

in which
    X each independently is F or H.

14. The method according to claim 13, wherein the 2-methoxy-1,1,1-trifluoroethane is mixed with another fluorine-containing volatile compound, the 2-methoxy-1,1,1-trifluoroethane comprising 1 to 99% by weight of the mixture.

15. In the foam blowing of a polymeric mass to form a foamed polymer, the improvement which comprises effecting said foam blowing with a 2-methoxy-1,1,1-trifluoroethane of the formula

$CF_3CH_2OCX_3$

in which
    X each independently is F or H.

16. The method according to claim 13, wherein the 2-methoxy-1,1,1-trifluoroethane is $CF_3CH_2OCH_3$.

17. The method according to claim 13, wherein the 2-methoxy-1,1,1-trifluoroethane is mixed with another fluorine-containing volatile compound, the 2-methoxy-1,1,1-trifluoroethane comprising 1 to 99% by weight of the mixture.